# EUROPEAN PATENT SPECIFICATION

(11) **EP 2 016 364 B1**
(45) Date of publication and mention of the grant of the patent: **11.01.2012**
(21) Application number: 07747600.0
(22) Date of filing: 24.04.2007
(51) Int. Cl.: G01B 3/00, B23B 47/28, B25H 7/00

(54) **MEASURING TOOL FOR MARKING OR DRILLING HOLES**
MESSWERKZEUG ZUM MARKIEREN ODER BOHREN VON LÖCHERN
OUTIL DE MESURE PERMETTANT DE MARQUER OU DE FORER DES TROUS

(30) Priority: 24.04.2006 NO 20061781
(43) Date of publication of application: 21.01.2009
(73) Proprietor: Olsen, Snorre, 9600 Hammerfest (NO)
(72) Inventor: Olsen, Snorre, 9600 Hammerfest (NO)
(74) Representative: Bergheim, Olav
(86) International application number: PCT/NO2007/000139
(87) International publication number: WO 2007/123415

(56) References cited:
- WO-A1-01/68301
- GB-A- 155 647
- US-A- 2 197 505
- US-A- 2 842 860
- US-A- 2 990 733
- US-A- 3 069 778
- US-A- 3 145 475
- US-A- 3 583 823
- US-A- 4 981 400
- US-A- 5 807 036
- US-A- 5 813 803

## Description

The present invention relates to a measuring tool, preferably for mounting handles on cabinet doors, bathroom doors and the like.

In particular when mounting elongate handles fastened by two screws through through-holes, and where holes are not predrilled or marked, it is with today's known aids a challenge to position the holes correctly, and the consequence of incorrect drilling is, as a rule, that the door is ruined and cannot be used. Moreover, it only takes a small error deviation in measuring/drilling for the handle to look crooked after mounting. Previously known templates, for example of cardboard, will be of little flexibility and are difficult to position accurately in relation to the door.

Other prior art includes tools or jigs with centring mechanisms, as described in US 3,583,823 and US 4,981,400, and a primarily T-shaped tool for manual positioning and measuring, as described in US 5,807,036. The two first-mentioned tools function only for centred mounting, which is seldom the case for, say, cabinet doors and drawers, whilst the last-mentioned tool is, among other things, bulky and awkward to use.

Further, WO 01/68301 A1 discloses a device for spacing and drilling a hole, comprising a base body which is equipped with drilling bushes and through which are inserted two graduated rules that are positioned at right angles to one onother.

Still further, US 3,145,475 discloses a measuring and marking device including a frame, a spacing member slidably mounted in the frame, two measuring bars, one slidably mounted on the frame and the other slidably mounted on the spacing member, suitably arranged scales, and leveling means for positioning and maintaining the frame in vertical orientation in planes at right angles.

The present invention seeks to prevent, reduce or eliminate the aforementioned disadvantages and defects by means of a measuring tool for marking or drilling holes, preferably for mounting handles on cabinet doors, bathroom doors and the like, comprising an essentially T-shaped main body including receiving means for detachable, lockably adjustable arms at each side of the T, wherein the arms can be adjusted at right angles to each other in an extension of the main body, two lockably adjustable sliding buttons with through holes for marking the cabinet door or the like being arranged in respective slots in the part of the main body that forms the top of the T.

Advantageous embodiments of the invention are set forth in the dependent claims.

The invention is described in more detail below, with reference to the attached figures, wherein:

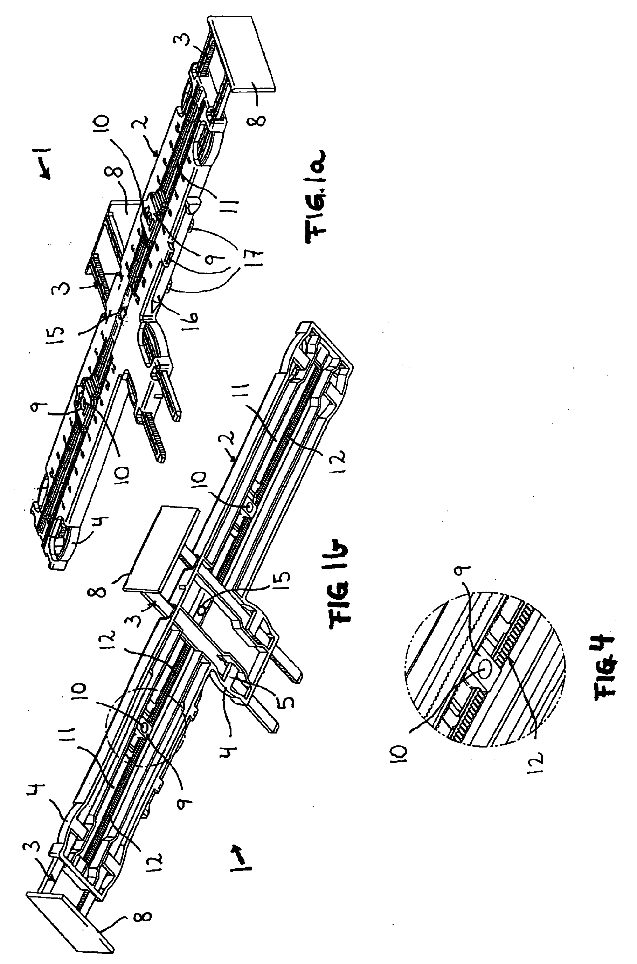

Figures 1a and 1b are perspective views of the measuring tool according to the invention, seen aslant from above and aslant from below;

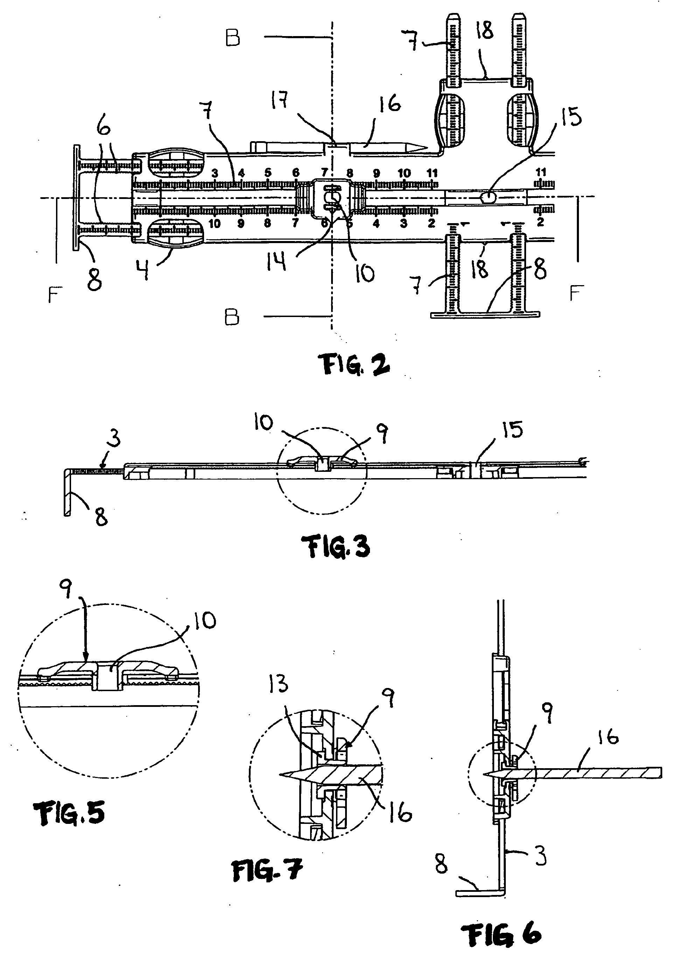

Figure 2 is a partial top view of the tool in Figure 1;
Figure 3 is a sectional view of the tool in Figure 2 along the line F-F;
Figure 4 is a detailed view of the area marked with a circle in Figure 1b;
Figure 5 is a detailed view of the area marked with a circle in Figure 3;
Figure 6 is essentially a sectional view of the tool in Figure 2 along the line B-B, but with a marker pen inserted in a marking hole:
Figure 7 is a detailed view of the area marked with a circle in Figure 6; and
Figures 8 and 9 show examples of the use of the measuring tool according to the invention, for measuring and drilling on a drawer and a cabinet door, respectively.

In the attached drawings, the illustrated measuring tool 1 according to the invention, comprising an essentially T-shaped main body 2, has receiving means for lockably adjustable arms 3 at each end of the T. The tool 1 is advantageously of plastic. The locking of the arms 3 advantageously takes place in that spring elements 4 with a gripping shoe 5 arranged on the main body 2 engage with notches or grooves 6 in the arms 3, and that the spring elements 4 are depressed for release of the locking engagement. The grooves 6 and the gripping shoe 5 are provided for adjustment in steps or intervals of one millimetre, and corresponding millimetre and centimetre markings 7, similar to a ruler or metre stick, are arranged on the arms 3 and the main body 2.

Each arm 3 is provided with a contact face 8 at its outer end, for contact with an outer edge of a cabinet door or the like. The arms 3 can be taken off or put on as required, and moved between the different receiving means for the arms 3 on the main body 2, adapted to the measuring task in question. Two arms 3 at right angles to each other are mounted on the tool 1 for measuring with a starting point in a cabinet door corner, and only one arm 3 for mounting with a starting point in just one cabinet door edge. The first-mentioned situation will be the normal use of the tool 1.

Two sliding buttons 9 with through holes 10 for marking on the cabinet door are arranged in respective slots 11 in the part of the main body 2 which forms the top of the T. On the underside of the tool 1, in connection with each slot 11, are arranged notches or grooves 12, and gripping portion 13 of the sliding button 9 on the underside thereof engages with the grooves 12 for locking the sliding button 9 in the grooves 12. For release of the sliding button 9, it is pushed down resiliently so that the gripping portion 13 disengages from the grooves 12, and in the same way as for locking the arms 3, the adjustment of the sliding button takes place in steps or intervals of one millimetre. Each sliding button 9 has a projecting tip 14 for indicating a set position along the millimetre and centimetre markings 7.

In addition to the two holes 10 in the sliding buttons 9, a third hole 15 is advantageously arranged in the extension of the two slots 11, at the point which can be said to form the point of intersection of the T.

A pricker or a marker 16 is advantageously detachably arranged in a holder 17 on the side of the tool 1, and has a diameter adapted to the diameter of the holes 10, 15 in the sliding buttons 9 and in the main body 2, respectively.

In particular for positioning the tool 1 in relation to just one side edge of a door, that is to say when only one arm 3 is used, there are advantageously provided projecting positioning tips 18 on the main body 2.

For drilling directly through the holes 10, 15, they may alternatively be equipped with metal bushings. Alternatively, the whole tool 1 may be made of metal.

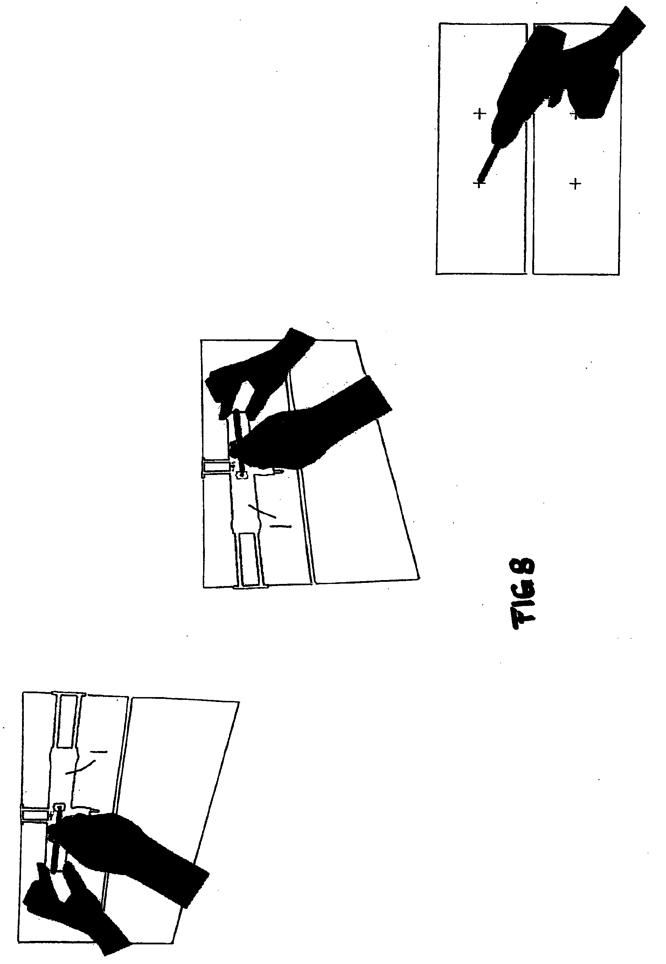

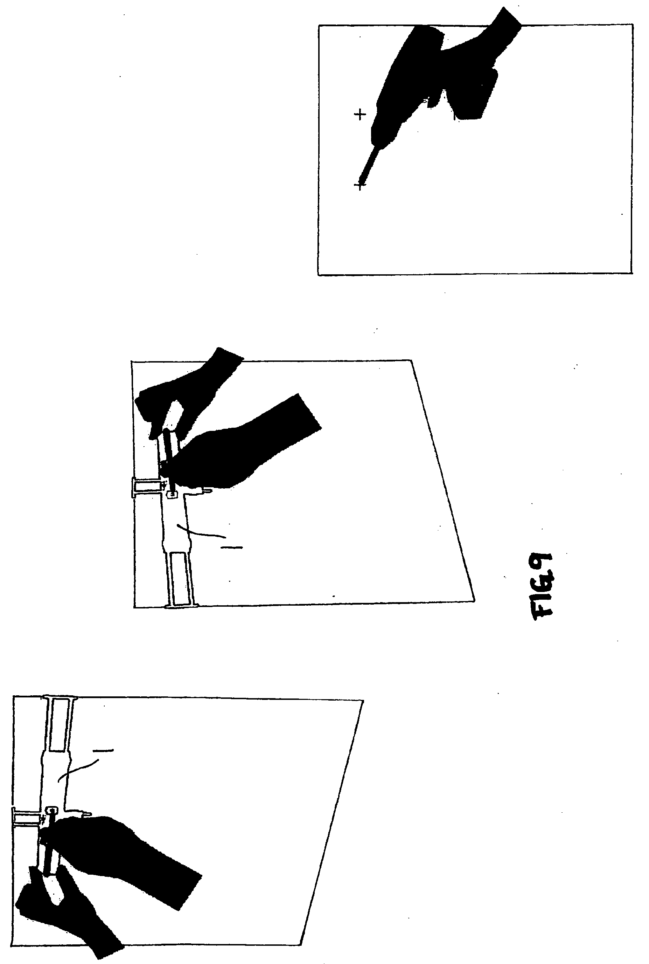

Examples of the use of the measuring tool 1 according to the invention, respectively for measuring and drilling on a drawer and a cabinet door, are shown in attached Figures 8 and 9.

## Claims

1. A measuring tool (1) for marking or drilling holes, preferably for mounting handles on cabinet doors, bathroom doors and the like, comprising an essentially T-shaped main body (2) including receiving means for detachable, lockably adjustable arms (3) at each side of the T, wherein the arms (3) can be adjusted at right angles to each other in an extension of the main body (2), two lockably adjustable sliding buttons (9) with through holes (10) for marking the cabinet door or the like being arranged in respective slots (11) in the part of the main body (2) that forms the top of the T.

2. A measuring tool according to claim 1, **characterised in that** the locking of the arms (3) is effected by spring elements (4) with a gripping shoe (5) arranged on the main body (2) which engage with notches or grooves (6) in the arms (3), which spring elements (4) are depressed for release of the locking engagement.

3. A measuring tool according to claim 2, **characterised in that** the groove (6) and the gripping shoe (5) are provided for adjustment in steps or intervals of one millimetre, there being arranged on the arms (3) and the main body (2) corresponding millimetre and centimetre markings (7) similar to a ruler or metre stick.

4. A measuring tool according to any one of the preceding claims, **characterised in that** the arm (3) is provided with a contact face (8) at its outer end, for contact with an outer edge of a cabinet door or the like.

5. A measuring tool according to any of the preceding claims, **characterised in that** on the underside of the tool (1), in connection with the slot (11), are arranged notches or grooves (12), a gripping portion (13) of the sliding button (9) on the underside of the sliding button (9) engaging with the grooves (12) for locking the sliding button (9) in the grooves (12).

6. A measuring tool according to any of the preceding claims, **characterised in that** for release of the sliding button (9), the sliding button (9) is pushed down resiliently so that the gripping portion (13) disengages from the groove (12), the adjustment of the sliding button (9) taking place in steps or intervals of one millimetre.

7. A measuring tool according to any of the preceding claims, **characterised in that** the sliding button (9) has a projecting tip (14) for indicating a set position along the millimetre and centimetre markings (7).

8. A measuring tool according to any of the preceding claims, **characterised in that** a fixed hole (15) is arranged in the extension of the two slots (11) at a point that can be said to form the point of intersection of the T.

9. A measuring tool according to claim 8, **characterised in that** a pricker or marker pen (16) is detachably arranged in a holder (17) on the side of the tool (1), and has a diameter adapted to the diameter of the holes (10, 15).

10. A measuring tool according to any one of the preceding claims, **characterised in that** projecting positioning tips (18) are provided on the main body (2).

11. A measuring tool according to claim 10, **characterised in that** the holes (10, 15) are equipped with metal bushings.

12. A measuring tool according to any one of the preceding claims, **characterised in that** the tool (1) is of plastic.

13. A measuring tool according to one of claims 1 to 10, **characterised in that** the tool (1) is of metal.

## Patentansprüche

1. Messwerkzeug (1) zum Markieren oder Bohren von Löchern, vorzugsweise zum Befestigen von Griffen an Schranktüren, Badezimmertüren o.Ä. mit einem im Wesentlichen T-förmigen Hauptkörper (2) umfassend Aufnahmemittel für lösbare, verriegelbare justierbare Hebel (3) auf jeder Seite des T, wobei die Hebel (3) zueinander in rechten Winkeln in einer Erweiterung des Hauptkörpers (2) justiert werden können, zwei verriegelbare justierbare Gleitknöpfe (9) mit Durchgangsbohrungen zum Markieren der Schranktür o.Ä. in entsprechenden Aussparungen (11) in dem Teil des Hauptkörpers (2), der das Kopfende des T bildet, angeordnet sind.

2. Messwerkzeug nach Anspruch 1, **dadurch gekennzeichnet, dass** das Verriegeln der Hebel (3) durch auf dem Hauptkörper (2) angeordnete Federelemente (4) mit einem Greifschuh (5) bewirkt wird, die mit Einschnitten oder Rillen (6) in den Hebeln (3) eingreifen, welche Federelemente (4) zum Freigeben der Verriegelung niedergedrückt werden.

3. Messwerkzeug nach Anspruch 2, **dadurch gekennzeichnet, dass** die Rille und der Greifschuh (5) für das Justieren in Schritten oder Intervallen von einem Millimeter vorgesehen sind, wobei entsprechende Millimeter- und Zentimetermarkierungen (7), wie auf einem Lineal, auf den Hebeln (3) und dem Hauptkörper (2) angeordnet sind.

4. Messwerkzeug nach irgendeinem der vorhergehenden Ansprüche, **dadurch gekennzeichnet, dass** der Hebel (3) am äußeren Ende mit einer Kontaktfläche (8) zum Kontaktieren einer äußeren Kante einer Schranktür o.Ä. versehen ist.

5. Messwerkzeug nach irgendeinem der vorhergehenden Ansprüche, **dadurch gekennzeichnet, dass** auf der Unterseite des Werkzeugs (1), in Verbindung mit der Aussparung (11), Einschnitte oder Rillen (12) versehen sind, wobei ein Greifteil (13) des Gleitknopfes (9) auf der Unterseite des Gleitknopfes (9) mit den Rillen (12) zum Verriegeln des Gleitknopfes (9) in den Rillen (12) eingreift.

6. Messwerkzeug nach irgendeinem der vorhergehenden Ansprüche, **dadurch gekennzeichnet, dass** zum Freigeben des Gleitknopfes (9) der Gleitknopf (9) elastisch nach unten gedrückt wird, damit sich der Greifteil (13) von der Rille (12) löst, wobei das Justieren des Gleitknopfes (9) in Schritten oder Intervallen von einem Millimeter erfolgt.

7. Messwerkzeug nach irgendeinem der vorhergehenden Ansprüche, **dadurch gekennzeichnet, dass** der Gleitknopf (9) eine hervorstehende Spitze (14) zum Angeben einer eingestellten Position entlang der Millimeter- und Zentimetermarkierungen (7) aufweist.

8. Messwerkzeug nach irgendeinem der vorhergehenden Ansprüche, **dadurch gekennzeichnet, dass** eine feste Bohrung (15) in der Erweiterung der zwei Aussparungen (11) an einem Punkt angeordnet ist, der sozusagen der Schnittpunkt des T bildet.

9. Messwerkzeug nach Anspruch 8, **dadurch gekennzeichnet, dass** ein Vorstecher oder Markierstift (16) in einer Halterung (17) auf der Seite des Werkzeugs (1) abnehmbar angeordnet ist und einen dem Durchmesser der Bohrungen (10, 15) entsprechenden Durchmesser aufweist.

10. Messwerkzeug nach irgendeinem der vorhergehenden Ansprüche, **dadurch gekennzeichnet, dass** die hervorstehenden Spitzen (18) auf dem Hauptkörper (2) versehen sind.

11. Messwerkzeug nach Anspruch 10, **dadurch gekennzeichnet, dass** die Bohrungen (10, 15) mit Metallbuchsen versehen sind.

12. Messwerkzeug nach irgendeinem der vorhergehenden Ansprüche, **dadurch gekennzeichnet, dass** das Werkzeug (1) aus Kunststoff besteht.

13. Messwerkzeug nach Anspruch 1 bis 10, **dadurch gekennzeichnet, dass** das Werkzeug (1) aus Metall besteht.

## Revendications

1. Outil de mesure (1) permettant de marquer ou de forer des trous, de préférence pour le montage de poignées sur les portes d'armoire, les portes de salle de bains et des portes pareils, comprenant un corps principal (2) essentiellement en forme de T comprenant des moyens de réception pour des bras (3) détachables, réglables de manière verrouillable à chaque côté du T, les bras (3) pouvant être réglés l'un perpendiculairement à l'autre dans un prolongement du corps principal (2), deux boutons coulissants (9) réglables de manière verrouillable avec des trous traversants (10) permettant de marquer la porte d'armoire ou un porte pareille étant disposés dans les fentes respectives (11) dans la partie du corps principal (2) qui forme le sommet de la lettre T.

2. Outil de mesure selon la revendication 1, **caractérisé en ce que** le verrouillage des bras (3) est effectué par des éléments de ressort (4) avec une chaussure de préhension (5) disposée sur le corps principal (2) qui s'engrène avec des encoches ou des rainures (6) dans les bras (3), éléments de ressort (4) qui sont déprimés pour la libération de l'engagement de verrouillage.

3. Outil de mesure selon la revendication 2, **caractérisé en ce que** la rainure (6) et la chaussure de préhension (5) sont pourvues pour le réglage par étapes ou des intervalles d'un millimètre, des marquages correspondants de millimètres et de centimètres (7) semblables à une règle ou une barre de mètre étant disposés sur les bras (3) et le corps principal (2).

4. Outil de mesure selon l'une quelconque des revendications précédentes, **caractérisé en ce que** le bras (3) est pourvu d'une face de contact (8) à son extrémité extérieure pour le contact avec un bord extérieur d'une porte d'armoire ou d'une porte pareille.

5. Outil de mesure selon l'une quelconque des revendications précédentes, **caractérisé en ce que** sur le dessous de l'outil (1) et en liaison avec la fente (11), sont disposées des encoches ou des rainures (12), une partie de préhension (13) du bouton coulissant (9) sur le dessous du bouton coulissant (9) s'engrenant avec les rainures (12) pour verrouiller le bouton coulissant (9) dans les rainures (12).

6. Outil de mesure selon l'une quelconque des revendications précédentes, **caractérisé en ce que** pour la libération du bouton coulissant (9), le bouton coulissant (9) est poussé vers le bas de manière résiliente si bien que la partie de préhension (13) se désengage de la rainure (12), le réglage du bouton coulissant (9) se déroulant par étapes ou des intervalles d'un millimètre.

7. Outil de mesure selon l'une quelconque des revendications précédentes, **caractérisé en ce que** le bouton coulissant (9) présente une pointe saillante (14) pour indiquer une position fixée le long des marquages de millimètre et de centimètres (7).

8. Outil de mesure selon l'une quelconque des revendications précédentes, **caractérisé en ce qu'**un trou fixe (15) est disposé dans le prolongement des deux fentes (11) à un point dont on peut dire qu'il forme le point d'intersection du T.

9. Outil de mesure selon la revendication 8, **caractérisé en ce qu'**un stylo piqueur ou de marqueur (16) est disposé de manière amovible dans un support (17) sur le côté de l'outil (1), et présente un diamètre adapté au diamètre des trous (10, 15).

10. Outil de mesure selon l'une quelconque des revendications précédentes, **caractérisé en ce que** des pointes de positionnement en saillie (18) sont pourvues sur le corps principal (2).

11. Outil de mesure selon la revendication 10, **caractérisé en ce que** les trous (10, 15) sont équipés de bagues métalliques.

12. Outil de mesure selon l'une quelconque des revendications précédentes, **caractérisé en ce que** l'outil (1) est en plastique.

13. Outil de mesure selon l'une des revendications 1 à 10, **caractérisé en ce que** l'outil (1) est en métal.
